# FASCICULE DE BREVET EUROPEEN

(11) **EP 3 238 295 B1**
(45) Date de publication et mention de la délivrance du brevet: **24.07.2019**
(21) Numéro de dépôt: 15828749.0
(22) Date de dépôt: 21.12.2015
(51) Int. Cl.: H01M 4/136, H01M 4/36, H01M 4/58, H01M 4/1397, H01M 4/60, H01M 4/62, H01M 10/052, H01M 4/02

(54) **MATIERE ACTIVE D'ÉLECTRODE POUR BATTERIE LI/S**
AKTIVELEKTRODENMATERIAL FÜR LITHIUM-IONEN-BATTERIE
ACTIVE ELECTRODE MATERIAL FOR A LI-S BATTERY

(30) Priorité: 22.12.2014 FR 1463052
(43) Date de publication de la demande: 01.11.2017
(73) Titulaire: Arkema France, 92700 Colombes (FR)
(72) Inventeur: KORZHENKO, Alexander, 64000 Pau (FR); VINCENDEAU, Christophe, 64140 Lons (FR)
(74) Mandataire: Bonnel, Claudine
(86) Numéro de dépôt international: PCT/FR2015/053682
(87) Numéro de publication internationale: WO 2016/102865

(56) Documents cités:
- WO-A1-2013/155038
- WO-A1-2016/066944
- FR-A1- 2 948 233
- US-A1- 2013 161 557
- ZHENG W ET AL: "Novel nanosized adsorbing sulfur composite cathode materials for the advanced secondary lithium batteries", ELECTROCHIMICA ACTA, ELSEVIER SCIENCE PUBLISHERS, BARKING, GB, vol. 51, no. 7, 2 août 2005 (2005-08-02), pages 1330-1335, XP028027836, ISSN: 0013-4686, DOI: 10.1016/J.ELECTACTA.2005.06.021 [extrait le 2006-01-05] cité dans la demande
- DATABASE EPODOC [Online] EUROPEAN PATENT OFFICE, THE HAGUE, NL; "Carbon/sulfur composite positive material having long cycle life, and preparation method thereof", XP002738433, Database accession no. CN-201210023158-A -& CN 103 247 799 A (NO 63971 TROOPS PLA) 14 août 2013 (2013-08-14)
- DATABASE EPODOC [Online] EUROPEAN PATENT OFFICE, THE HAGUE, NL; "Nano carbon sulfur composite material with network structure and preparation method of nano carbon composite material", XP002738434, Database accession no. CN-201110039005-A -& CN 102 142 554 A (NO 63971 TROOPS OF PLA) 3 août 2011 (2011-08-03)

## Description

### DOMAINE TECHNIQUE

La présente invention concerne le domaine des batteries Li/S. Plus particulièrement, l'invention concerne une matière active pour la fabrication d'une électrode, comprenant des nanocharges carbonées dispersées de façon homogène dans la masse d'un matériau soufré, la matière active pouvant être obtenue selon un procédé en voie fondue.

### ETAT DE LA TECHNIQUE

Un accumulateur lithium/soufre (dénommé par la suite batterie Li/S) se compose d'une électrode positive (cathode) de soufre élémentaire ou d'un autre matériau soufré électroactif, d'une électrode négative (anode) formée de lithium métallique ou d'un alliage métallique à base de lithium, ainsi que d'un électrolyte liquide organique.

Typiquement, l'électrode positive est préparée à partir d'une matière active comprenant du soufre élémentaire Ss (dénommé par la suite soufre natif), et éventuellement de différents additifs, mélangée à un solvant et un liant formant ainsi une pâte qui est appliquée sur un collecteur de courant, puis séchée afin d éliminer le solvant. La structure composite formée est éventuellement soumise à une étape de compression, puis découpée à la taille désirée de la cathode.

La batterie Li/S est obtenue en déposant un séparateur sur la cathode, puis une anode de lithium est déposée sur le séparateur. Un électrolyte comprenant généralement au moins un sel de lithium dissout dans un solvant est ensuite introduit dans la batterie.

Les batteries Li/S font l'objet de nombreuses recherches depuis les années 2000 et sont pressenties comme des alternatives prometteuses aux batteries Li-ion conventionnelles. L'intérêt de ce type de batterie vient de la forte capacité de stockage massique de l'électrode de soufre, permettant d'atteindre des densités d'énergie pouvant aller jusqu'à 500 Wh.kg⁻¹. En outre, le soufre natif présente les avantages non négligeables d'être abondant, de bas coût et non toxique, ce qui permet d'envisager le développement des batteries Li/S à grande échelle.

Le mécanisme de décharge et charge d'une batterie Li/S est basé sur la réduction/oxydation du soufre à la cathode (S + 2e⁻ ↔ S²⁻) et l'oxydation/réduction du lithium à l'anode (Li ↔ Li⁺ + e⁻).

Au cours de la décharge, les molécules de soufre Ss sont réduites et forment des chaines de polysulfures de lithium, de formule générale Li₂Sₙ (n ≥2), solubilisées dans l'électrolyte organique. La dernière étape de réduction du soufre consiste en la formation de sulfure de lithium Li₂S qui précipite dans l'électrolyte organique et se dépose sur l'anode. Les réactions électrochimiques inverses se produisent en charge.

Pour permettre aux réactions électrochimiques de se produire rapidement aux électrodes, la cathode et l'anode doivent être globalement bonnes conductrices électroniques. Or, le soufre étant un isolant électronique (σ = 5.10⁻³⁰ S.cm⁻¹ à 25°C), les régimes de décharge sont relativement lents.

Différentes voies d'amélioration visant à pallier cette faible conductivité électronique de la matière active sont envisagées, notamment l'ajout d'un additif conducteur électronique tel qu'un matériau carboné conducteur. Cependant la cinétique de réaction à la cathode reste limitée si le mélange soufre/additif n'est pas optimal ou si la teneur en additif est trop faible.

Parmi les additifs conducteurs, le noir de carbone, le carbone activé, les fibres de carbone ou les nanotubes de carbone sont généralement employés. Le noir de carbone est classiquement utilisé.

Le mélange de la matière active et de l'additif conducteur peut se faire de différentes façons.

Par exemple, le mélange peut se faire directement lors de la préparation de l'électrode. Le soufre est alors mélangé avec l'additif conducteur et le liant par agitation mécanique, avant mise en forme de l'électrode. Grâce à cette étape d'homogénéisation, l'additif carboné est supposé se répartir autour des particules de soufre, et créer ainsi un réseau percolant. Une étape de broyage peut également être employée et permet d'obtenir un mélange plus intime des matériaux. Cependant, cette étape supplémentaire peut entraîner une destruction de la porosité de l'électrode.

Une autre manière de mélanger la matière active avec l'additif carboné consiste à broyer le soufre et l'additif carboné en voie sèche, de façon à enrober le soufre de carbone.

Dans la même optique, le carbone peut être déposé autour des particules de soufre par dépôt en phase vapeur. A l'inverse, une structure coeur-écorce peut également être préparée à partir de noir de carbone sur lequel est déposée une couche de soufre, par exemple par précipitation du soufre sur des nanoparticules de noir de carbone.

A titre d'exemple, dans le document FR 2 948 233, il est décrit un matériau composite conducteur obtenu à partir d'un traitement chimique de soufre et de carbone, introduits dans un réacteur scellé sans régulation externe de la pression à l'intérieur du réacteur, à une température comprise entre 115°C et 400°C, pendant une durée suffisante pour faire fondre le soufre et atteindre un équilibre. Ce matériau se présente sous forme de particules de soufre recouvertes de carbone présentant une faible surface spécifique. Le procédé d'introduction de carbone dans du soufre, décrit dans ce document, n'est cependant applicable qu'à des nanocharges carbonées sans facteur de forme ni d'agrégation, et ne conduit pas à des nanocharges carbonées dispersées de façon homogène dans la masse du soufre.

Le document US 2013/0161557 décrit un procédé de préparation d'un matériau actif d'électrode pour une batterie de lithium-soufre de terres rares. Le procédé conduit à un matériau composite comprenant du soufre fondu absorbé dans des nanotubes de carbone à température élevée et sous vide. Ce matériau composite est ensuite soumis à différents traitements incluant solubilisation dans un alcool, broyage, séchage, calcination, de façon à former une matière active d'électrode. Le procédé décrit dans ce document est relativement complexe à mettre à oeuvre.

A la différence du noir de carbone, les additifs de type nanotubes de carbone (NTC) présentent l'avantage de conférer également un effet adsorbant bénéfique pour la matière active en limitant sa dissolution dans l'électrolyte et favorisant ainsi une meilleure cyclabilité.

Par exemple, dans l'article Electrochimica Acta 51 (2006), pp133-1335, Zheng W. et al décrit la préparation d'un matériau composite soufre / nanotubes de carbone (NTC) par mélange en voie fondue à haute température pendant un long temps de séjour. Cependant, les tests de cyclage réalisés avec ce matériau n'ont été effectués que sur 60 cycles, ce qui ne permet pas de montrer que les nanotubes de carbone sont bien dispersés de façon homogène dans la masse du soufre pour obtenir un effet sur la durée de vie de l'électrode.

La demande de brevet CN 103 247 799 A décrit un matériau composite d'électrode comprenant un réseau de nanofibres de carbone greffées avec divers composés organiques ; le matériau est obtenu par compoundage en voie fondue des nanofibres de carbone greffées avec du soufre élémentaire.

L'introduction de NTC dans les formulations constituant les électrodes soulève encore de nombreux problèmes. En effet les NTC s'avèrent difficiles à manipuler et à disperser, en raison de leur faible taille, de leur pulvérulence et, éventuellement, lorsqu'ils sont obtenus par dépôt chimique en phase vapeur (CVD), de leur structure enchevêtrée générant par ailleurs de fortes interactions de Van Der Waals entre leurs molécules. La faible dispersion des NTC limite l'efficacité du transfert de charge entre l'électrode positive et l'électrolyte et ainsi la performance de la batterie Li/S malgré l'addition du matériau conducteur.

C'est pourquoi, il serait avantageux pour le formulateur de disposer d'une matière active comprenant des NTC bien dispersés dans du soufre, et plus généralement dans un matériau soufré, sous la forme de matière active prête à l'emploi, pouvant être utilisée directement dans une formulation pour la fabrication d'une électrode pour batterie Li/S en vue d'augmenter efficacement sa conductivité électronique.

La Demanderesse a maintenant trouvé qu'une matière active comprenant des nanotubes de carbone dispersés de façon homogène dans la masse d'un matériau soufré tel que du soufre permet d'augmenter les interfaces charges conductrices/soufre et ainsi d'augmenter la capacité de charge et décharge de la batterie incorporant cette matière active.

La Demanderesse a découvert également que cette matière active pouvait être obtenue en mettant en contact des NTC avec un matériau soufré en voie fondue par exemple dans un dispositif de compoundage, formant ainsi une matière active améliorée, utilisable pour la préparation d'une électrode.

Il est par ailleurs apparu que cette invention pouvait également être appliquée à d'autres nanocharges carbonées que les NTC, en particulier aux nanofibres de carbone, et au graphène, ou leurs mélanges en toutes proportions.

### RESUME DE L'INVENTION

L'invention a pour objet une matière active pour la fabrication d'une électrode comprenant :
- un matériau soufré ;
- de 1 à 25% en poids de nanocharges carbonées dispersées de façon homogène dans la masse du matériau soufré, l'homogénéité pouvant être visualisée par microscopie électronique ;
caractérisée en ce qu'elle se présente sous forme d'une poudre comprenant des particules présentant une taille moyenne inférieure à 150 µm, un diamètre médian dso compris entre 1 et 60 µm, et un diamètre médian d₉₀ inférieur à 100 µm, ces caractéristiques étant déterminées par diffraction laser.

Selon un mode de réalisation, la matière active d'électrode comprend de 5 à 25% en poids de nanocharges carbonées dispersées de façon homogène dans la masse du matériau soufré.

Ladite matière active d'électrode est caractérisée en ce qu'elle présente une porosité inférieure à 20%.

Ladite matière active d'électrode est caractérisée en ce qu'elle présente une masse volumique supérieure à 1,6 g/cm³.

Selon un mode de réalisation de l'invention, ladite matière active est obtenue par voie fondue, en particulier avec une énergie mécanique pouvant être comprise entre 0,05 kWh et 1 kWh par kg de matière active, de préférence entre 0,2 et 0,5 kWh/kg de matière active.

Par "nanocharge carbonée", on désigne une charge carbonée dont la plus petite dimension est comprise entre 0,1 et 200 nm, de préférence entre 0,1 et 160 nm, de manière plus préférée entre 0,1 et 50 nm, mesurée par diffusion de la lumière,
Par "nanocharge carbonée", on désigne une charge comprenant au moins un élément du groupe formé des nanotubes de carbone, des nanofibres de carbone et du graphène, ou un mélange de ceux-ci en toutes proportions. De préférence, les nanocharges carbonées comprennent au moins des nanotubes de carbone.

Par "matériau soufré", on entend un composé donneur de soufre, choisi parmi le soufre natif (ou élémentaire), les composés ou polymères organiques soufrés et les composés inorganiques soufrés.

Selon un mode de réalisation préféré de l'invention, le matériau soufré comprend au moins du soufre natif, le matériau soufré étant du soufre natif seul, ou en mélange avec au moins un autre matériau soufré.

La matière active selon l'invention comprend des nanocharges carbonées bien percolées dans une matrice soufrée fondue, et les nanocharges carbonées sont réparties de façon homogène dans toute la masse du matériau soufré, ce qui peut être visualisé par exemple par microscopie électronique. Le mélange matériau soufré/nanocharge est de morphologie adaptée à une optimisation du fonctionnement d'une électrode de batterie Li/S.

La matière active selon l'invention peut ainsi assurer un transfert d'électricité efficace depuis le collecteur de courant de l'électrode et offrir les interfaces actives aux réactions électrochimiques lors du fonctionnement de la batterie.

Ainsi, la présente invention fournit une matière active présentant une meilleure association d'un matériau donneur de soufre, avec des particules de nanocharges carbonées pour faciliter l'accès du soufre aux réactions électrochimiques. En outre, l'électrode incorporant la matière active selon l'invention procure un bon maintien du fonctionnement de la batterie au cours du temps.

Selon un mode de réalisation de l'invention, la matière active comprend en outre au moins un additif choisi parmi un modificateur de rhéologie, un liant, un conducteur ionique, un conducteur électrique carboné, un élément donneur d'électrons ou leur association. Tout comme les nanocharges carbonées, le/les additifs sont incorporés dans la matière active par voie fondue.

Un autre aspect de l'invention est l'utilisation de la matière active telle que décrite précédemment dans une électrode, en particulier dans une cathode de batterie Li/S. La matière active selon l'invention permet d'améliorer la conductivité électronique de la formulation de l'électrode.

### BREVE DESCRIPTION DES FIGURES

La **figure 1** représente la distribution de la taille des particules de la poudre obtenue à l'exemple 1 selon l'invention.
La **figure 2** illustre au MEB la morphologie de la matière active d'électrode obtenue à l'exemple 1 selon l'invention.

### DESCRIPTION DETAILLEE DE L'INVENTION

L'invention est maintenant décrite plus en détail et de façon non limitative dans la description qui suit.

### Les nanocharges carbonées

Selon l'invention, les nanocharges carbonées peuvent être des nanotubes de carbone, des nanofibres de carbone, du graphène, ou un mélange de ceux-ci en toutes proportions. De préférence, les nanocharges carbonées sont des nanotubes de carbone, seuls ou mélange avec au moins une autre nanocharge carbonée.

Les nanotubes de carbone (NTC) entrant dans la composition de la matière active peuvent être du type monoparoi, à double paroi ou à parois multiples, de préférence à parois multiples (MWNT)
Les nanotubes de carbone mis en oeuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm, voire de 10 à 15 nm, et avantageusement une longueur de plus de 0,1 µm et avantageusement de 0,1 à 20 µm, de préférence de 0,1 à 10 µm, par exemple d'environ 6 µm. Leur rapport longueur/diamètre est avantageusement supérieur à 10 et le plus souvent supérieur à 100. Leur surface spécifique est par exemple comprise entre 100 et 300 m²/g, avantageusement entre 200 et 300 m²/g, et leur densité apparente peut notamment être comprise entre 0,01 et 0,5 g/cm³ et plus préférentiellement entre 0,07 et 0,2 g/cm³. Les MWNT peuvent par exemple comprendre de 5 à 15 feuillets et plus préférentiellement de 7 à 10 feuillets.

Les nanotubes de carbone sont notamment obtenus par dépôt chimique en phase vapeur, par exemple selon le procédé décrit dans le document WO 06/082325. De préférence, ils sont obtenus à partir de matière première renouvelable, en particulier d'origine végétale, comme décrit dans la demande de brevet EP 1980530.

Ces nanotubes peuvent ou non être traités.

Un exemple de nanotubes de carbone bruts est notamment la dénomination commerciale Graphistrength® C100 de la société Arkema.

Ces nanotubes peuvent être purifiés et/ou traités (par exemple oxydés) et/ou broyés et/ou fonctionnalisés.

Le broyage des nanotubes peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes bruts ou broyés peut être réalisée par lavage à l'aide d'une solution d'acide sulfurique, de manière à les débarrasser d'éventuelles impuretés minérales et métalliques résiduelles, comme par exemple le Fer provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes.

On utilise de préférence dans la présente invention des nanotubes de carbone bruts éventuellement broyés, c'est-à-dire des nanotubes qui ne sont ni oxydés ni purifiés ni fonctionnalisés et n'ont subi aucun autre traitement chimique et/ou thermique.

Les nanofibres de carbone utilisables comme nanocharges carbonées dans la présente invention sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure, car les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus.

Des exemples de nanofibres de carbone utilisables ont en particulier un diamètre de 100 à 200 nm, par exemple d'environ 150 nm, et avantageusement une longueur de 100 à 200 µm. On peut utiliser par exemple les nanofibres VGCF® de SHOWA DENKO.

Par graphène, on désigne un feuillet de graphite plan, isolé et individualisé, mais aussi, par extension, un assemblage comprenant entre un et quelques dizaines de feuillets et présentant une structure plane ou plus ou moins ondulée. Cette définition englobe donc les FLG (Few Layer Graphene ou graphène faiblement empilé), les NGP (Nanosized Graphene Plates ou plaques de graphène de dimension nanométrique), les CNS (Carbon NanoSheets ou nano-feuilles de graphène), les GNR (Graphene NanoRibbons ou nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets. On préfère par ailleurs que le graphène utilisé selon l'invention ne soit pas soumis à une étape supplémentaire d'oxydation chimique ou de fonctionnalisation.

Le graphène utilisé selon l'invention est obtenu par dépôt chimique en phase vapeur ou CVD, de préférence selon un procédé utilisant un catalyseur pulvérulent à base d'un oxyde mixte. Il se présente, de façon caractéristique, sous forme de particules d'une épaisseur de moins de 50 nm, de préférence de moins de 15 nm, plus préférentiellement de moins de 5 nm et de dimensions latérales inférieures au micron, de préférence de 10 nm à moins de 1000 nm, plus préférentiellement de 50 à 600 nm, voire de 100 à 400 nm. Chacune de ces particules renferme en général de 1 à 50 feuillets, de préférence de 1 à 20 feuillets et plus préférentiellement de 1 à 10 feuillets, voire de 1 à 5 feuillets qui sont susceptibles d'être désolidarisés les uns des autres sous la forme de feuillets indépendants, par exemple lors d'un traitement par ultrasons.

### Le matériau soufré

Le matériau soufré peut être du soufre natif, un composé ou polymère organique soufré, ou un composé inorganique soufré, ou un mélange de ceux-ci en toutes proportions.

Différentes sources de soufre natif sont disponibles commercialement. La granulométrie de la poudre de soufre peut varier dans de larges mesures. Le soufre peut être utilisé tel quel, ou le soufre peut être au préalable purifié selon différentes techniques telles que raffinage, sublimation, ou précipitation. Le soufre, ou plus généralement le matériau soufré, peut être également soumis à une étape préalable de broyage et/ou tamisage afin de réduire la taille des particules et resserrer leur distribution.

Les composés inorganiques soufrés utilisables comme matériaux soufrés sont par exemple des polysulfures anioniques de métal alcalin, de préférence les polysulfures de lithium représentés par la formule Li₂Sₙ (avec n ≥1).

Les composés ou polymères organiques soufrés utilisables comme matériaux soufrés peuvent être choisis parmi les polysulfures organiques, les polythiolates organiques incluant par exemple des groupes fonctionnels tels que dithioacétal, dithiocétal ou trithio-orthocarbonate, les polysulfures aromatiques, les polyéther-polysulfures, les sels d'acides polysulfures, les thiosulfonates [-S(O)₂-S-], les thiosulfinates [-S(O)-S-], les thiocarboxylates [-C(O)-S-], les dithiocarboxylates [-RC(S)-S-], les thiophosphates, les thiophosphonates, les thiocarbonates, les polysulfures organométalliques, ou leurs mélanges.

Des exemples de tels composés organo soufrés sont notamment décrits dans le document WO 2013/155038.

Selon un mode de réalisation particulier de l'invention, le matériau soufré est un polysulfure aromatique.

Les polysulfures aromatiques répondent à la formule générale (I) suivante : 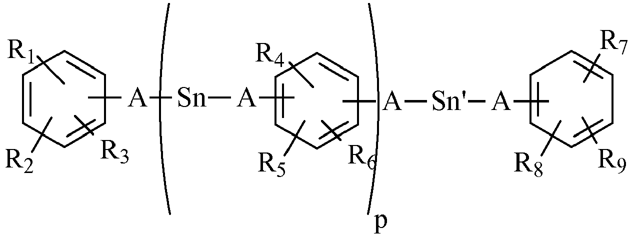 dans laquelle :
- R₁ à R₉ représentent de façon identique ou différente, un atome d'hydrogène, un radical -OH ou -O⁻M⁺, ou une chaîne carbonée saturée ou insaturée comportant de 1 à 20 atomes de carbone, ou un groupe -OR₁₀, avec R₁₀ pouvant être un radical alkyle, arylalkyle, acyle, carboalkoxy, éther alkyle, silyle, silyle alkyles, comportant de 1 à 20 atomes de carbone.
- M représente un métal alcalin ou alcalino-terreux
- n et n' sont deux entiers, identiques ou différents, chacun étant supérieur ou égal à 1 et inférieur ou égal à 8,
- p est un entier compris entre 0 et 50,
- et A est un atome d'azote, une liaison simple, ou une chaîne carbonée saturée ou insaturée de 1 à 20 atomes de carbone.

De préférence, dans la formule (I) :
- R₁, R₄ et R₇ sont des radicaux O⁻M⁺,
- R₂, R₅ et R₈ sont des atomes d'hydrogène,
- R₃, R₆ et R₉ sont des chaînes carbonées saturées ou insaturées comportant de 1 à 20 atomes de carbone, de préférence de 3 à 5 atomes de carbone,
- la valeur moyenne de n et de n' est d'environ 2,
- la valeur moyenne de p est comprise entre 1 et 10, de préférence entre 3 et 8. (Ces valeurs moyennes sont calculées par l'homme du métier à partir de données RMN du proton et par dosage pondéral du soufre).
- A est une liaison simple reliant les atomes de soufre aux cycles aromatiques.

De tels polysulfures de poly(alkyl phénol) de formule (I) sont connus et peuvent être préparés par exemple en deux étapes :
1) réaction du monochlorure ou du dichlorure de soufre sur un alkyl phénol, à une température comprise entre 100 et 200 °C, selon la réaction suivante : 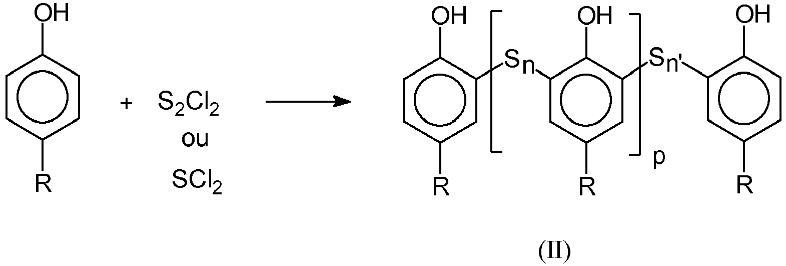 Les composés de formule (II) sont notamment commercialisés par la Société ARKEMA sous la dénomination VULTAC®.
2) réaction du composé (II) avec un dérivé métallique contenant le métal M, tel que par exemple un oxyde, un hydroxyde, un alcoolate ou un dialkylamide de ce métal pour obtenir des radicaux O⁻M⁺.

Selon une variante davantage préférée, R est un radical tertio-butyle ou tertio-pentyle.

Selon une autre variante préférée de l'invention, on utilise un mélange de composés de formule (I) dans laquelle 2 des radicaux R présents sur chaque unité aromatique sont des chaînes carbonées comprenant au moins un carbone tertiaire par lequel R est relié au noyau aromatique.

### La matière active

La quantité de nanocharges carbonées dans la matière active représente de 1 à 25% en poids, de préférence de 10 à 15% en poids, par exemple de 12 à 14% en poids, par rapport au poids total de la matière active.

La matière active selon l'invention est un produit fini à l'état solide comprenant un mélange intime de particules, les nanocharges carbonées étant dispersées dans la masse du matériau soufré et cela de façon homogène.

La matière active présente avantageusement une masse volumique supérieure à 1,6 g/cm³, déterminée selon la norme NF EN ISO 1183-1. La masse volumique est généralement inférieure à 2 g/cm³.

Elle présente aussi avantageusement une porosité inférieure à 20%. La porosité peut être déterminée à partir de la différence entre la masse volumique théorique et la masse volumique mesurée.

La matière active d'électrode telle que définie selon l'invention permet d'augmenter la capacité spécifique de l'électrode qui est plus dense, et d'augmenter la capacité de charge et décharge de l'électrode.

Le mélange homogène de particules peut ensuite être broyé pour obtenir une poudre ne présentant pas de particules de taille supérieure à 100 µm, de préférence ne présentant pas de particules de taille supérieure à 50 µm afin de faciliter le processus de fabrication de l'électrode.

Les nanocharges carbonées tels que des NTC, sont mélangées avec le matériau soufré, en particulier avec du soufre, de préférence en voie fondue. Cependant, la fusion du mélange étant limitée par la différence de densité entre les NTC (0,1 g/cm³) et le soufre (2 g/cm³), il est généralement nécessaire d'ajouter une énergie mécanique intense pour réaliser ce mélange, pouvant être comprise entre 0,05 kWh/kg et 1 kWh/ kg de matière active, de préférence entre 0,2 et 0,5 kWh/kg de matière active. Les nanocharges carbonées sont ainsi dispersées de façon homogène dans toute la masse des particules, et ne se trouvent pas uniquement à la surface des particules soufrées comme décrit dans le document FR 2 948 233.

Pour ce faire, on utilise préférentiellement un dispositif de compoundage, c'est-à-dire un appareillage classiquement utilisé dans l'industrie des matières plastiques pour le mélange à l'état fondu de polymères thermoplastiques et d'additifs en vue de produire des composites.

La matière active selon l'invention peut ainsi être préparée selon un procédé comprenant les étapes suivantes :
(a) l'introduction dans un dispositif de compoundage, d'au moins un matériau soufré, et de nanocharges carbonées,
(b) la fusion du matériau soufré ;
(c) le malaxage du matériau soufré fondu et des nanocharges carbonées ;
(d) la récupération du mélange obtenu sous une forme physique solide agglomérée ;
(e) le broyage du mélange sous forme de poudre.

Dans un appareillage de compoundage, le matériau soufré et les nanocharges carbonées sont mélangés à l'aide d'un dispositif à fort cisaillement, par exemple une extrudeuse à double vis co-rotatives ou un co-malaxeur. La matière fondue sort généralement de l'appareillage sous une forme physique solide agglomérée, par exemple sous forme de granulés, ou sous forme de joncs qui, après refroidissement, sont découpés en granulés.

Des exemples de co-malaxeurs utilisables sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion ou d'une pompe.

Les co-malaxeurs utilisables ont de préférence un rapport de vis L/D allant de 7 à 22, par exemple de 10 à 20, tandis que les extrudeuses co-rotatives ont avantageusement un rapport L/D allant de 15 à 56, par exemple de 20 à 50.

L'étape de compoundage est mise en oeuvre à une température supérieure à la température de fusion du matériau soufré. Dans le cas du soufre, la température de compoundage peut aller de 120°C à 150°C. Dans le cas d'autres types de matériau soufré, la température de compoundage est fonction du matériau spécifiquement utilisé dont la température de fusion est généralement mentionnée par le fournisseur du matériau. Le temps de séjour sera également adapté à la nature du matériau soufré.

Ce procédé permet de disperser de façon efficace et homogène une quantité importante de nanocharges carbonées dans le matériau soufré, malgré la différence de densité entre les constituants de la matière active.

Selon un mode de réalisation de l'invention, la matière active comprend en outre au moins un additif choisi parmi un modificateur de rhéologie, un liant, un conducteur ionique, un conducteur électrique carboné, un élément donneur d'électrons ou leur association. Ces additifs sont avantageusement introduits durant l'étape de compoundage, de façon à obtenir une matière active homogène.

Dans ce mode de réalisation, le matériau soufré et les nanocharges carbonées représentent alors de 20 % à 100 % en poids, de préférence de 20% à 80% en poids par rapport au poids total de la matière active.

En particulier, il est possible d'ajouter, pendant le mélange, durant l'étape de compoundage, un additif modificateur de la rhéologie du soufre à l'état fondu, afin de réduire l'autoéchauffement du mélange dans le dispositif de compoundage. De tels additifs ayant un effet fluidifiant sur le soufre liquide sont décrits dans la demande WO 2013/178930. On peut citer à titre d'exemples le sulfure de diméthyle, le sulfure de diéthyle, le sulfure de dipropyle, le sulfure de dibutyle, le disulfure de diméthyle, le disulfure de diéthyle, le disulfure de dipropyle, le disulfure de dibutyle, leurs homologues trisulfures, leurs homologues tétrasulfures, leurs homologues pentasulfures, leurs homologues hexasulfures, seuls ou en mélanges de deux ou plusieurs d'entre eux en toutes proportions.

La quantité d'additif modificateur de rhéologie est généralement comprise entre 0,01% à 5% en poids, de préférence de 0,1% à 3% en poids par rapport au poids total de la matière active.

La matière active peut comprendre un liant, notamment un liant polymère, choisi par exemple parmi les polymères halogénés, de préférence les polymères fluorés, les polyoléfines fonctionnelles, les polyacrylonitriles, les polyuréthanes, les acides polyacryliques et leurs dérivés, les alcools polyvinyliques et les polyéthers, ou un mélange de ceux-ci en toutes proportions.

On peut citer à titre d'exemples de polymères fluorés, le poly(fluorure de vinylidène) (PVDF), de préférence sous forme a, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ; le perfluoropropyl vinyléther (PPVE), le perfluoroéthyl vinyléther (PEVE), le 2,3,3,3 tétrafluoropropène, et les copolymères d'éthylène avec le perfluorométhylvinyl éther (PMVE), ou leurs mélanges.

On peut citer à titre d'exemples de polyéthers, les polyoxydes d'alkylène tels que les polyoxydes d'éthylène POE, les polyalkylène glycols tels que les polyéthylène glycols PEG, les polypropylène glycols PPG, les polytétraméthylène glycols (PTMG), les polytétraméthylène éther glycols (PTMEG), etc.

De préférence, le liant est le PVDF ou un POE.

La matière active peut comprendre un conducteur ionique ayant une interaction favorable à la surface du matériau soufré afin d'augmenter la conductivité ionique de la matière active. Comme exemples de conducteurs ioniques, on peut citer de façon non limitative les sels organiques de lithium, par exemple des sels d'imidazolate de lithium, ou les sulfites de lithium. On peut citer aussi les polyoxydes d'alkylène qui, outre leur fonction de liant, peuvent apporter des propriétés de conductivité ionique à la matière active.

La matière active peut comprendre un conducteur électrique, avantageusement un conducteur électrique carboné, tel que du noir de carbone, du graphite ou du graphène, généralement dans des proportions pouvant aller de 1 à 10 % par rapport au matériau soufré. De préférence, le noir de carbone est utilisé comme conducteur électrique.

La matière active peut comprendre un élément donneur d'électrons pour améliorer les échanges électroniques et réguler la longueur des polysulfures au cours de la charge, ce qui optimise les cycles de charge/décharge de la batterie.

Comme éléments donneurs d'électrons, on peut utiliser avantageusement un élément, sous forme de poudre ou sous forme de sel, des colonnes IVa, Va et VIa du tableau périodique, de préférence choisi parmi Se, Te, Ge, Sn, Sb, Bi, Pb, Si ou As.

La matière active selon l'invention se présente sous forme d'une poudre comprenant des particules présentant une taille moyenne inférieure à 150 µm, de préférence inférieure à 100 µm, un diamètre médian d₅₀ compris entre 1 et 60 µm, de préférence entre 10 et 60 µm, plus préférentiellement entre 20 et 50 µm, un diamètre médian d₉₀ inférieur à 100 µm, de préférence un diamètre d₁₀₀ inférieur à 50µm, ces caractéristiques étant déterminées par diffraction laser.

Pour obtenir cette morphologie de poudre, on utilise généralement un appareillage de type broyeur à marteaux, broyeur à brosses, broyeur à billes, un broyeur à jet air, ou d'autres méthodes de la micronisation des matériaux solides.

La matière active selon l'invention, de préférence sous forme de poudre telle que caractérisée précédemment, et présentant avantageusement une porosité inférieure à 20% et/ou une masse volumique supérieure à 1,6 g/cm³, peut être utilisée pour préparer une électrode de batterie Li/S, elle représente en général de l'ordre de 20 à 95% en poids, de préférence de 35 à 80 % en poids par rapport à la formulation complète de l'électrode.

L'invention sera maintenant illustrée par les exemples suivants, qui n'ont pas pour but de limiter la portée de l'invention, définie par les revendications annexées.

### PARTIE EXPERIMENTALE

### Exemple 1 : Préparation d'une matière active S/NTC

Des NTC (Graphistrength® C100 d'ARKEMA) et du soufre solide (50-800 µm) ont été introduits dans la première trémie d'alimentation d'un co-malaxeur BUSS® MDK 46 (L/D = 11), équipé d'une vis d'extrusion de reprise et d'un dispositif de granulation.

Les consignes de température au sein du co-malaxeur étaient les suivantes : Zone 1 : 140°C ; Zone 2 : 130°C ; Vis : 120°C.

A la sortie de la filière, le mélange constitué de 87,5% en poids de soufre et 12,5% en poids de NTC est sous forme de granulés obtenus par la coupe en tête, refroidie par de l'air.

Les granulés ont ensuite été broyés dans un broyeur à marteaux, le refroidissement étant assuré par de l'azote.

L'observation au microscope électronique à balayage (MEB) a montré que les NTC étaient bien dispersés dans le soufre.

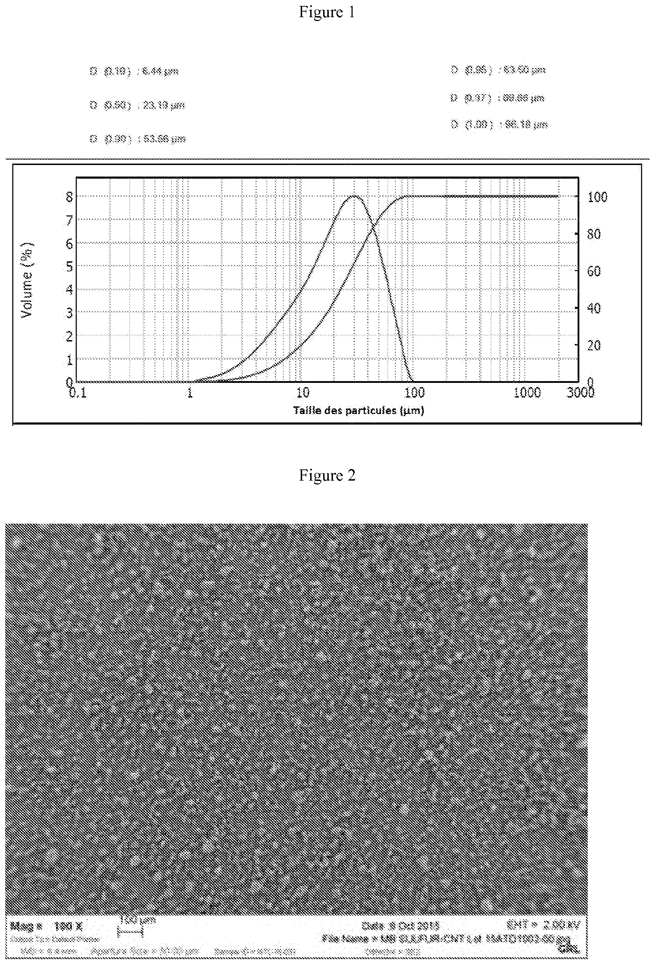

Les granulés ont été broyés dans un broyeur à brosses à haute vitesse (12000-14000 tpm), le refroidissement étant réalisé par de l'azote liquide à -30°C introduit sur les granulés dans la vis d'alimentation du broyeur. La poudre a été tamisée à l'aide d'une grille de 80µm cylindrique. La distribution de la taille des particules déterminée par diffraction laser sur un appareil type Malvern est illustrée sur la Figure 1. La taille des plus grosses particules est inférieure à 100 µm, et le diamètre médian d₅₀ est compris entre 20 et 50 µm.

Le tamisage de la poudre a été réalisé dans un second essai à l'aide d'une grille de 50 µm cylindrique. La distribution de la taille des particules indique que le diamètre d₁₀₀ est inférieur à 50 µm. La morphologie de la matière active d'électrode ainsi obtenue est illustrée sur la Figure 2.

Cette poudre constituée de 87,5% en poids de soufre et 12,5% en poids de NTC est une matière active utilisée pour la préparation d'une électrode pour batterie Li/S.

### Exemple 2 : Préparation d'une matière active S/DMDS/NTC

Des NTC (Graphistrength® C100 d'ARKEMA) et du soufre solide (50-800 µm) ont été introduits dans la première trémie d'alimentation d'un co-malaxeur BUSS® MDK 46 (L/D = 11), équipé d'une vis d'extrusion de reprise et d'un dispositif de granulation.

Du disulfure de diméthyle (DMDS), liquide, a été injecté dans la 1^{ère} zone du co-malaxeur.

Les consignes de température au sein du co-malaxeur étaient les suivantes : Zone 1 : 140°C ; Zone 2 : 130°C ; Vis : 120°C.

A la sortie de la filière, le mélange-maître constitué de 83% en poids de soufre, 2% en poids de DMDS et 15% en poids de NTC est sous forme de granulés obtenus par la coupe en tête, refroidie par un jet d'eau.

Les granulés obtenus ont été séchés jusqu'à un taux d'humidité < 100 ppm.

Les granulés secs ont ensuite été broyés dans un broyeur à marteaux, le refroidissement étant assuré par de l'azote.

On a obtenu une poudre présentant un diamètre médian D₅₀ comprise entre 30 et 60 µm, utilisée pour la préparation d'une électrode pour batterie Li/S.

### Exemple 3 : Préparation d'une matière active S/disulfure de poly(tertio-butyl phénol)/NTC

Des NTC (Graphistrength® C100 d'ARKEMA) et du soufre solide (50-800 µm) ont été introduits dans la première trémie d'alimentation d'un co-malaxeur BUSS® MDK 46 (L/D = 11), équipé d'une vis d'extrusion de reprise et d'un dispositif de granulation.

Du disulfure de diméthyle (DMDS), liquide, a été injecté dans la 1^{ère} zone du co-malaxeur.

Le disulfure de poly(tertio-butyl phénol) commercialisé sous la dénomination VULTAC- TB7® d'Arkema a été prémélangé avec un sel de Li, commercialisé sous la dénomination LOA (Lithium 4,5-dicyano-2-(trifluoromethyl)imidazole) par Arkema puis introduit dans la première trémie à l'aide d'un 3^{ème} doseur.

Les consignes de température au sein du co-malaxeur étaient les suivantes : Zone 1 : 140°C ; Zone 2 : 130°C ; Vis : 120°C.

A la sortie de la filière, le mélange est sous forme de granulés obtenus par la coupe en tête, refroidie par un jet d'eau.

Les granulés obtenus ont été séchés jusqu'à un taux d'humidité < 100 ppm.

Les granulés secs ont ensuite été broyés dans un broyeur à marteaux, le refroidissement étant assuré par de l'azote.

On a obtenu une poudre constituée de 77% en poids de soufre, 2% en poids de DMDS et 15% en poids de NTC, 5% de VULTAC- TB7®, 1% de LOA, utilisée pour la préparation d'une électrode pour batterie Li/S.

### Exemple 4 : Préparation d'une matière active S/POE/Li₂S /NTC

Des NTC (Graphistrength® C100 d'ARKEMA) et du soufre solide (50-800 µm) ont été introduits dans la première trémie d'alimentation d'un co-malaxeur BUSS® MDK 46 (L/D = 11), équipé d'une vis d'extrusion de reprise et d'un dispositif de granulation.

L'oxyde polyéthylène POLYOX® WSR N-60K (produit par DOW) a été premélangé avec le Li₂S fourni SIGMA. Ce mélange est introduit dans la 1^{ère} trémie par le 3eme doseur.

Les consignes de température au sein du co-malaxeur étaient les suivantes : Zone 1 : 140°C ; Zone 2 : 130°C ; Vis : 120°C.

A la sortie de la filière, le mélange constitué en poids de 70% de soufre, 15% de NTC, 10% de POLYOX® WSR N-60K, et 5% de Li₂S est sous forme de granulés obtenus par le graduateur du jonc, recoupé par le tapis roulant sans contact avec l'eau.

Les granulés secs ont ensuite été broyés dans un broyeur à marteaux, le refroidissement étant assuré par de l'azote.

On a obtenu une poudre constituée en poids de 70% de soufre, 15% de NTC, 10% de POLYOX® WSR N-60K, et 5% de Li₂S comprenant des particules présentant une taille moyenne inférieure à 150 µm, un diamètre médian D₅₀ et D₉₀ adaptés pour que la poudre soit utilisée comme matière active de cathode pour batterie Li/S.

### Exemple 5 : Evaluation de la matière active

Des tests d'évaluation de matière active ont été réalisés dans un modèle de batterie Li/S contenant :
1) Anode en Li métallique, épaisseur 100 µm ;
2) Séparateur /membrane (20 µm)
3) Electrolyte base de Sulfolane avec 1M de Li⁺
4) Cathode à base d'une formulation soufrée supportée par un collecteur en Al Deux formulations de cathode ont été testées :
   - formulation de référence comprenant en poids 70% de soufre, 10% de noir de carbone et 20% de POE (POLYOX® WSR N-60K), représentative de l'art antérieur.
   - Formulation comprenant en poids 80% de matière active de l'exemple 1, 5% de noir de carbone et 15% de POE.

La formulation de cathode a été appliquée sur l'électrode via une pâte dans un solvant puis séchage.

La capacité de la cathode de la cellule de test est entre 1,5 et 3 mAh/cm².

Les cellules de test ont été mises dans des conditions de charge/décharge.

Les performances de la cathode ont été évaluées après 150 cycles :
- cathode préparée à partir de la formulation de référence : 78% par rapport à la capacité initiale
- cathode préparée à partir de la formulation comprenant la matière active selon l'invention : 88% par rapport à la capacité initiale

Ces résultats confirment que la matière active selon l'invention, comportant des nanocharges carbonées permet d'améliorer la durée de vie et donc l'efficacité d'une batterie Li/S.

## Revendications

1. Matière active pour la fabrication d'une électrode comprenant:
- un matériau soufré ;
- de 1 à 25% en poids de nanocharges carbonées choisies parmi des nanotubes de carbone, des nanofibres de carbone, du graphène, ou un mélange de ceux-ci en toutes proportions, dispersées de façon homogène dans la masse du matériau soufré ;
et **caractérisée en ce que** la matière active se présente sous forme d'une poudre comprenant des particules présentant une taille moyenne inférieure à 150 µm, un diamètre médian dso compris entre 1 et 60 µm, et un diamètre médian d₉₀ inférieur à 100 µm, ces caractéristiques étant déterminées par diffraction laser ;
et **en ce que** l'homogénéité de la matière active est telle que elle peut être visualisée par microscopie électronique.

2. Matière active d'électrode selon la revendication 1 **caractérisée en ce qu'**elle présente une porosité inférieure à 20%.

3. Matière active d'électrode selon la revendication 1 **caractérisée en ce qu'**elle présente une masse volumique supérieure à 1,6 g/cm³.

4. Matière active selon l'une quelconque des revendications précédentes, **caractérisée en ce que** les nanocharges carbonées sont des charges carbonées dont la plus petite dimension est comprise entre 0,1 et 200 nm, de préférence entre 0,1 et 160 nm, de manière plus préférée entre 0,1 et 50 nm, mesurée par diffusion de la lumière.

5. Matière active selon l'une quelconque des revendications précédentes, **caractérisée en ce que** le matériau soufré est un composé soufré donneur de soufre choisi parmi le soufre natif, les composés ou polymères organiques soufrés, ou les composés inorganiques soufrés, ou un mélange de ceux-ci en toutes proportions, le matériau soufré comprenant de préférence au moins du soufre natif.

6. Matière active selon la revendication 5, **caractérisée en ce que** les composés inorganiques soufrés sont des polysulfures anioniques de métal alcalin, de préférence des polysulfures de lithium représentés par la formule Li₂Sₙ , avec n ≥1.

7. Matière active selon la revendication 5, **caractérisée en ce que** le matériau soufré est choisi parmi les polysulfures organiques, les polythiolates organiques incluant notamment des groupes fonctionnels tels que dithioacétal, dithiocétal ou trithioorthocarbonate, les polysulfures aromatiques, les polyéther-polysulfures, les sels d'acides polysulfures, les thiosulfonates [-S(O)₂-S-], les thiosulfinates [-S(O)-S-], les thiocarboxylates [-C(O)-S-], les dithiocarboxylates [-RC(S)-S-], les thiophosphates, les thiophosphonates, les thiocarbonates, les polysulfures organométalliques, ou leurs mélanges.

8. Matière active selon la revendication 7, **caractérisé en ce que** le matériau soufré est un polysulfure aromatique répondant à la formule générale (I) suivante : 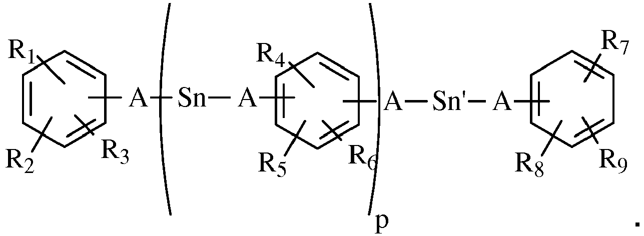 dans laquelle :
- R₁ à R₉ représentent de façon identique ou différente, un atome d'hydrogène, un radical -OH ou -O⁻M⁺ avec M représentant un métal alcalin ou alcalino-terreux, ou une chaîne carbonée saturée ou insaturée comportant de 1 à 20 atomes de carbone, ou un groupe -OR₁₀, avec R₁₀ pouvant être un radical alkyle, arylalkyle, acyle, carboalkoxy, éther alkyle, silyle, silyle alkyles, comportant de 1 à 20 atomes de carbone,
- - n et n' sont deux entiers, identiques ou différents, chacun étant supérieur ou égal à 1 et inférieur ou égal à 8,
- p est un entier compris entre 0 et 50,
- et A est un atome d'azote, une liaison simple, ou une chaîne carbonée saturée ou insaturée de 1 à 20 atomes de carbone.

9. Matière active selon l'une quelconque des revendications précédentes, **caractérisée en ce qu'**elle comprend en outre au moins un additif choisi parmi un modificateur de rhéologie, un liant, un conducteur ionique, un conducteur électrique carboné, un élément donneur d'électrons ou leur association.

10. Matière active selon la revendication 9, **caractérisée en ce que** le modificateur de rhéologie est le sulfure de diméthyle, le sulfure de diéthyle, le sulfure de dipropyle, le sulfure de dibutyle, le disulfure de diméthyle, le disulfure de diéthyle, le disulfure de dipropyle, le disulfure de dibutyle, leurs homologues trisulfures, leurs homologues tétrasulfures, leurs homologues pentasulfures, leurs homologues hexasulfures, seuls ou en mélanges de deux ou plusieurs d'entre eux en toutes proportions.

11. Matière active selon la revendication 9, **caractérisée en ce que** le liant est choisi parmi les polymères halogénés, de préférence les polymères fluorés, les polyoléfines fonctionnelles, et les polyéthers, ou un mélange de ceux-ci en toutes proportions.

12. Matière active selon la revendication 9, **caractérisée en ce que** le liant est un polymère fluoré choisi parmi le poly(fluorure de vinylidène) (PVDF), de préférence sous forme a, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ; le perfluoropropyl vinyléther (PPVE), le perfluoroéthyl vinyléther (PEVE), le 2,3,3,3 tétrafluoropropène, et les copolymères d'éthylène avec le perfluorométhylvinyl éther (PMVE), ou leurs mélanges .

13. Matière active selon la revendication 9, **caractérisée en ce que** le liant est un polyéther choisi parmi les polyoxydes d'alkylène ou les polyalkylène glycols.

14. Matière active selon la revendication 9, **caractérisée en ce que** le conducteur ionique est un sel organique de lithium tel qu'un sel d'imidazolate de lithium, un sulfite de lithium, ou un polyoxyde d'alkylène.

15. Matière active selon la revendication 9 **caractérisée en ce que** le conducteur électrique carboné est du noir de carbone, du graphite ou du graphène.

16. Matière active selon la revendication 9, **caractérisée en ce que** l'élément donneur d'électrons est un élément, sous forme de poudre ou sous forme de sel, des colonnes IVa, Va et VIa du tableau périodique, de préférence choisi parmi Se, Te, Ge, Sn, Sb, Bi, Pb, Si ou As.

17. Matière active selon l'une quelconque des revendications précédentes, **caractérisée en ce qu'**elle est sous forme de poudre comprenant des particules présentant une taille moyenne inférieure à 100 µm, un diamètre médian d₅₀ compris entre 10 et 60 µm et un diamètre médian d₉₀ inférieur à 50 µm.

18. Utilisation de la matière active selon l'une quelconque des revendications précédentes dans une électrode.

## Patentansprüche

1. Aktivmaterial zur Herstellung einer Elektrode, umfassend:
- ein schwefelhaltiges Material;
- 1 bis 25 Gew.-% kohlenstoffhaltige Nanofüllstoffe, ausgewählt aus Kohlenstoffnanoröhren, Kohlenstoffnanofasern, Graphen oder einem Gemisch von diesen in allen Verhältnissen, die homogen in der Masse des schwefelhaltigen Materials dispergiert sind;
und **dadurch gekennzeichnet, dass** das Aktivmaterial in Form eines Pulvers vorliegt, das Partikel mit einer mittleren Größe von weniger als 150 µm, einem mittleren Durchmesser d₅₀ zwischen 1 und 60 µm und einem mittleren Durchmesser d₉₀ von weniger als 100 µm aufweist, wobei diese Eigenschaften mittels Laserbeugung bestimmt werden;
**und dadurch, dass** die Homogenität des Aktivmaterials derart ist, dass sie mittels Elektronenmikroskopie sichtbar gemacht werden kann.

2. Elektrodenaktivmaterial nach Anspruch 1, **dadurch gekennzeichnet, dass** es eine Porosität von weniger als 20% aufweist.

3. Elektrodenaktivmaterial nach Anspruch 1, **dadurch gekennzeichnet, dass** es eine Rohdichte von mehr als 1,6 g/cm³ aufweist.

4. Aktivmaterial nach einem der vorhergehenden Ansprüche, **dadurch gekennzeichnet, dass** die kohlenstoffhaltigen Nanofüllstoffe kohlenstoffhaltige Füllstoffe sind, deren kleinste Abmessung zwischen 0,1 und 200 nm, vorzugsweise zwischen 0,1 und 160 nm, stärker bevorzugt zwischen 0,1 und 50 nm, mittels Lichtstreuung gemessen, beträgt.

5. Aktivmaterial nach einem der vorhergehenden Ansprüche, **dadurch gekennzeichnet, dass** das schwefelhaltige Material eine schwefelhaltige Schwefeldonor-Verbindung ist, ausgewählt aus elementarem Schwefel, schwefelhaltigen organischen Verbindungen oder Polymeren oder anorganischen schwefelhaltigen Verbindungen oder einem Gemisch von diesen in allen Verhältnissen, wobei das schwefelhaltige Material vorzugsweise mindestens elementaren Schwefel umfasst.

6. Aktivmaterial nach Anspruch 5, **dadurch gekennzeichnet, dass** die anorganischen schwefelhaltigen Verbindungen anionische Alkalimetallpolysulfide, vorzugsweise Lithiumpolysulfide, dargestellt durch die Formel Li₂Sₙ mit n ≥ 1, sind.

7. Aktivmaterial nach Anspruch 5, **dadurch gekennzeichnet, dass** das schwefelhaltige Material aus organischen Polysulfiden, organischen Polythiolaten, die insbesondere funktionelle Gruppen wie Dithioacetal, Dithioketal oder Trithioorthocarbonat enthalten, aromatischen Polysulfiden, Polyetherpolysulfiden, Salzen von Polysulfidsäuren, Thiosulfonaten [-S(O)₂-S-] , Thiosulfinaten [-S(O)-S-], Thiocarboxylaten [-C(O)-S-], Dithiocarboxylaten [-RC(S)-S-], Thiophosphaten, Thiophosphonaten, Thiocarbonaten, metallorganischen Polysulfiden oder deren Gemischen ausgewählt ist.

8. Aktivmaterial nach Anspruch 7, **dadurch gekennzeichnet, dass** das schwefelhaltige Material ein aromatisches Polysulfid gemäß der folgenden allgemeinen Formel (I) ist: 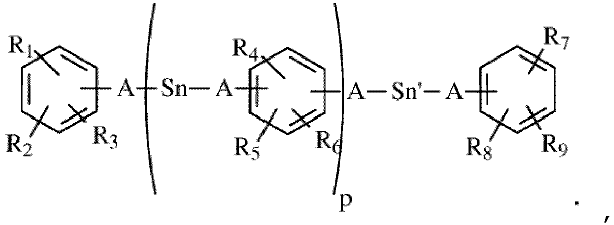 worin:
- R₁ bis R₉ gleich oder verschieden sind und ein Wasserstoffatom, einen Rest -OH oder -O⁻M⁺, wobei M ein Alkali- oder Erdalkalimetall darstellt, oder eine gesättigte oder ungesättigte Kohlenstoffkette mit 1 bis 20 Kohlenstoffatomen oder eine Gruppe -OR₁₀, wobei R₁₀ ein Alkyl-, Arylalkyl-, Acyl-, Carboalkoxy-, Alkylether-, Silyl-, Alkylsilylrest mit 1 bis 20 Kohlenstoffatomen sein kann, darstellen,
- n und n' zwei gleiche oder verschiedene ganze Zahlen sind, die jeweils größer oder gleich 1 und kleiner oder gleich 8 sind,
- p eine ganze Zahl zwischen 0 und 50 ist
- und A ein Stickstoffatom, eine Einfachbindung oder eine gesättigte oder ungesättigte Kohlenstoffkette mit 1 bis 20 Kohlenstoffatomen ist.

9. Aktivmaterial nach einem der vorhergehenden Ansprüche, **dadurch gekennzeichnet, dass** es außerdem mindestens ein Additiv umfasst, ausgewählt aus einem Rheologiemodifikator, einem Bindemittel, einem Ionenleiter, einem kohlenstoffhaltigen elektrischen Leiter, einem Elektronendonor-Element oder deren Kombination.

10. Aktivmaterial nach Anspruch 9, **dadurch gekennzeichnet, dass** der Rheologiemodifikator Dimethylsulfid, Diethylsulfid, Dipropylsulfid, Dibutylsulfid, Dimethyldisulfid, Diethyldisulfid, Dipropyldisulfid, Dibutyldisulfid, deren Trisulfid-Homologa, deren Tetrasulfid-Homologa, deren Pentasulfid-Homologa, deren Hexasulfid-Homologa, allein oder in Gemischen von zwei oder mehreren von ihnen in allen Verhältnissen, ist.

11. Aktivmaterial nach Anspruch 9, **dadurch gekennzeichnet, dass** das Bindemittel aus halogenierten Polymeren, vorzugsweise fluorierten Polymeren, funktionellen Polyolefinen und Polyethern oder einem Gemisch von diesen in allen Verhältnissen ausgewählt ist.

12. Aktivmaterial nach Anspruch 9, **dadurch gekennzeichnet, dass** das Bindemittel ein fluoriertes Polymer ist, ausgewählt aus Poly(vinylidenfluorid) (PVDF), vorzugsweise in der α-Form, Poly(trifluorethylen) (PVF3), Polytetrafluorethylen (PTFE), Copolymeren von Vinylidenfluorid mit entweder Hexafluorpropylen (HFP) oder Trifluorethylen (VF3) oder Tetrafluorethylen (TFE) oder Chlortrifluorethylen (CTFE), Fluorethylen/-propylen-Copolymeren (FEP), Copolymeren von Ethylen mit entweder Fluorethylen/-propylen (FEP) oder Tetrafluorethylen (TFE) oder Chlortrifluorethylen (CTFE); Perfluorpropylvinylether (PPVE), Perfluorethylvinylether (PEVE), 2,3,3,3-Tetrafluorpropen und Copolymeren von Ethylen mit Perfluormethylvinylether (PMVE) oder deren Gemischen.

13. Aktivmaterial nach Anspruch 9, **dadurch gekennzeichnet, dass** das Bindemittel ein Polyether ist, ausgewählt aus Polyalkylenoxiden oder Polyalkylenglykolen.

14. Aktivmaterial nach Anspruch 9, **dadurch gekennzeichnet, dass** der Ionenleiter ein organisches Lithiumsalz wie ein Lithiumimidazolatsalz, ein Lithiumsulfit oder ein Polyalkylenoxid ist.

15. Aktivmaterial nach Anspruch 9, **dadurch gekennzeichnet, dass** der kohlenstoffhaltige elektrische Leiter Ruß, Graphit oder Graphen ist.

16. Aktivmaterial nach Anspruch 9, **dadurch gekennzeichnet, dass** das Elektronendonor-Element ein Element in Pulverform oder in Salzform aus den Gruppen IVa, Va und VIa des Periodensystems, vorzugsweise ausgewählt aus Se, Te, Ge, Sn, Sb, Bi, Pb, Si oder As, ist.

17. Aktivmaterial nach einem der vorhergehenden Ansprüche, **dadurch gekennzeichnet, dass** es in Form eines Pulvers vorliegt, das Partikel mit einer mittleren Größe von weniger als 100 µm, einem mittleren Durchmesser d₅₀ zwischen 10 und 60 µm und einem mittleren Durchmesser d₉₀ von weniger als 50 µm aufweist.

18. Verwendung des Aktivmaterials nach einem der vorhergehenden Ansprüche in einer Elektrode.

## Claims

1. Active material for the manufacture of an electrode, comprising:
- a sulfur-based material;
- from 1 to 25% by weight of carbon-based nanofillers chosen from carbon nanotubes, carbon nanofibres, graphene or a mixture of these in all proportions, homogeneously dispersed in the body of the sulfur-based material;
and **characterized in that** the active material is provided in the form of a powder comprising particles exhibiting a mean size of less than 150 µm, a median diameter d₅₀ of between 1 and 60 µm and a median diameter d₉₀ of less than 100 µm, these characteristics being determined by laser diffraction;
**and in that** the homogeneity of the active material is such that it can be visualized by electron microscopy.

2. Electrode active material according to Claim 1, **characterized in that** it exhibits a porosity of less than 20%.

3. Electrode active material according to Claim 1, **characterized in that** it exhibits a density of greater than 1.6 g/cm³.

4. Active material according to any one of the preceding claims, **characterized in that** the carbon-based nanofillers are carbon-based fillers, the smallest dimension of which is between 0.1 and 200 nm, preferably between 0.1 and 160 nm and more preferably between 0.1 and 50 nm, measured by light scattering.

5. Active material according to any one of the preceding claims, **characterized in that** the sulfur-based material is a sulfur-donating sulfur-based compound chosen from native sulfur, sulfur-based organic compounds or polymers, or sulfur-based inorganic compounds, or a mixture of these in all proportions, the sulfur-based material preferably comprising at least native sulfur.

6. Active material according to Claim 5, **characterized in that** the sulfur-based inorganic compounds are alkali metal anionic polysulfides, preferably lithium polysulfides represented by the formula Li₂Sₙ, with n ≥ 1.

7. Active material according to Claim 5, **characterized in that** the sulfur-based material is chosen from organic polysulfides, organic polythiolates including, in particular, functional groups, such as dithioacetal, dithioketal or trithioorthocarbonate, aromatic polysulfides, polyether-polysulfides, salts of polysulfide acids, thiosulfonates [-S(O)₂-S-], thiosulfinates [-S(O)-S-], thiocarboxylates [-C(O)-S-], dithiocarboxylates [-RC(S)-S-], thiophosphates, thiophosphonates, thiocarbonates, organometallic polysulfides or their mixtures.

8. Active material according to Claim 7, **characterized in that** the sulfur-based material is an aromatic polysulfide corresponding to the following general formula (I) : 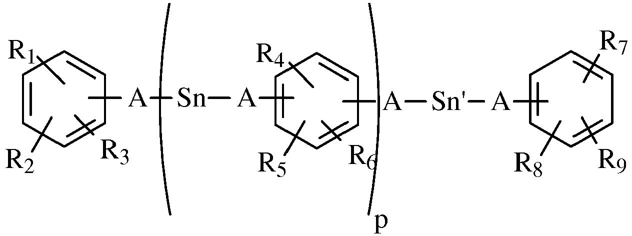 in which:
- R₁ to R₉ represent, in identical or different fashion, a hydrogen atom, an -OH or -O⁻M⁺ radical with M representing an alkali metal or alkaline earth metal, or a saturated or unsaturated carbon-based chain comprising from 1 to 20 carbon atoms or an -OR₁₀ group, with it being possible for R₁₀ to be an alkyl, arylalkyl, acyl, carboalkoxy, alkyl ether, silyl or alkylsilyl radical comprising from 1 to 20 carbon atoms,
- n and n' are two integers which are identical or different, each being greater than or equal to 1 and less than or equal to 8,
- p is an integer between 0 and 50,
- and A is a nitrogen atom, a single bond or a saturated or unsaturated carbon-based chain comprising 1 to 20 carbon atoms.

9. Active material according to any one of the preceding claims, **characterized in that** it additionally comprises at least one additive chosen from a rheology modifier, a binder, an ion conductor, a carbon-based electrical conductor, an electron-donating component or their combination.

10. Active material according to Claim 9, **characterized in that** the rheology modifier is dimethyl sulfide, diethyl sulfide, dipropyl sulfide, dibutyl sulfide, dimethyl disulfide, diethyl disulfide, dipropyl disulfide, dibutyl disulfide, their trisulfide homologs, their tetrasulfide homologs, their pentasulfide homologs, their hexasulfide homologs, alone or as mixtures of two or more of them in all proportions.

11. Active material according to Claim 9, **characterized in that** the binder is chosen from halogenated polymers, preferably fluorinated polymers, functional polyolefins, and polyethers, or a blend of these in all proportions.

12. Active material according to Claim 9, **characterized in that** the binder is a fluorinated polymer chosen from poly (vinylidene fluoride) (PVDF), preferably in the α form, poly(trifluoroethylene) (PVF3), polytetrafluoroethylene (PTFE), copolymers of vinylidene fluoride with either hexafluoropropylene (HFP) or trifluoroethylene (VF3) or tetrafluoroethylene (TFE) or chlorotrifluoroethylene (CTFE), fluoroethylene/propylene (FEP) copolymers, copolymers of ethylene with either fluoroethylene/propylene (FEP) or tetrafluoroethylene (TFE) or chlorotrifluoroethylene (CTFE); perfluoropropyl vinyl ether (PPVE), perfluoroethyl vinyl ether (PEVE), 2,3,3,3-tetrafluoropropene and copolymers of ethylene with perfluoromethyl vinyl ether (PMVE), or their blends.

13. Active material according to Claim 9, **characterized in that** the binder is a polyether chosen from poly(alkylene oxide)s or polyalkylene glycols.

14. Active material according to Claim 9, **characterized in that** the ion conductor is a lithium organic salt, such as a lithium imidazolate salt, a lithium sulfite or a poly(alkylene oxide).

15. Active material according to Claim 9, **characterized in that** the carbon-based electrical conductor is carbon black, graphite or graphene.

16. Active material according to Claim 9, **characterized in that** the electron-donating component is a component, in the powder form or in the salt form, from Groups IVa, Va and VIa of the Periodic Table, preferably chosen from Se, Te, Ge, Sn, Sb, Bi, Pb, Si or As.

17. Active material according to any one of the preceding claims, **characterized in that** it is in the form of a powder comprising particles exhibiting a mean size of less than 100 µm, a median diameter d₅₀ of between 10 and 60 µm and a median diameter d₉₀ of less than 50 µm.

18. Use of the active material according to any one of the preceding claims in an electrode.
